# EUROPEAN PATENT SPECIFICATION

(11) **EP 2 825 016 B1**
(45) Date of publication and mention of the grant of the patent: **25.07.2018**
(21) Application number: 12709072.8
(22) Date of filing: 12.03.2012
(51) Int. Cl.: A01D 34/64, A01D 34/66

(54) **CUTTING DECK LIFT SYSTEM FOR LAWN MOWER**
MÄHWERKHEBEVORRICHTUNG FÜR RASENMÄHER
SYSTÈME ÉLÉVATEUR DU MODULE DE COUPE D'UNE TONDEUSE À GAZON

(43) Date of publication of application: 21.01.2015
(73) Proprietor: Husqvarna AB, 561 82 Huskvarna (SE)
(72) Inventor: AXELSSON, Mats, S-561 46 Huskvarna (SE); HANSSON, Robin, S-561 92 Huskvarna (SE); MEJEGARD, Peter, S-556 28 Jönköping (SE)
(74) Representative: Schröer, Gernot H.
(86) International application number: PCT/EP2012/054277
(87) International publication number: WO 2013/135267

(56) References cited:
- EP-A1- 1 759 569
- US-A- 5 079 907
- US-A- 5 475 971
- US-A1- 2008 245 044

## Description

### BACKGROUND

Lawn care tasks are commonly performed using various tools and/or machines that are configured for the performance of corresponding specific tasks. Certain tasks, like grass cutting, are typically performed by lawn mowers. Lawn mowers themselves may have many different configurations to support the needs and budgets of consumers. Walk-behind lawn mowers are typically compact, have comparatively small engines and are relatively inexpensive. Meanwhile, at the other end of the spectrum, riding lawn mowers, such as lawn tractors, are often larger and can sometimes also be configured with various functional accessories (e.g., trailers, tillers and/or the like) in addition to grass cutting components. Riding lawn mowers provide the convenience of a riding vehicle as well as a typically larger cutting deck as compared to a walk-behind model.

Lawn mowers, including both riding and walk-behind mowers, may have the cutting deck in areas other than underneath the mower, such as in front, back or side relative to the frame of the mower. Lawn mower cutting decks sometimes require inspection and maintenance, e.g. grass removing, cleaning and sharpening of the cutting blades, replacement of cutting blades, replacement of spindles, etc., so as to function properly. When the lawn mower is positioned on the ground, the part of the mower deck that often needs to be serviced, i.e., the underside, can be difficult for an operator to access. The cutting decks can be heavy and removal of the cutting deck can be cumbersome, time consuming, and require many tools.

The document US 5,475,971 A discloses a riding rotary mower having a first chassis and a second chassis and a deck defining a blade housing containing a plurality of cutting blades. The second chassis is movably connected to the first chassis such that, upon actuation of a hydraulic assembly, the second chassis and the deck are movable relative to the first chassis between an operating position wherein the second chassis, the deck and the cutting blade are positioned for cutting grass, and an inspection position wherein the second chassis, the deck and the cutting blade extend in an upwardly direction at an angle to the first chassis. The connection of the second chassis to the first chassis also permits restricted horizontal and lateral movement of the second chassis and the mowing deck so that the second chassis and the mowing deck can automatically adjust to the contour of a supporting surface such as the ground.

### BRIEF SUMMARY OF SOME EXAMPLE EMBODIMENTS

According to the invention, a lawn mower is provided and includes a frame, a cutting deck, an arm, and a stay. The cutting deck includes an underside that can be directed downwardly toward the ground for mowing. The cutting deck also includes a pivot point and a cutting deck attachment mechanism separated from each other. The arm is connected to a lifting mechanism and connects the cutting deck with the frame so that the arm is configured to lift the cutting deck from a lower position to an upper position. The stay includes a first end and a second end. The first end of the stay is configured to connect to the cutting deck attachment mechanism, and the second end is configured to connect to a frame attachment mechanism of the frame. As such, while the cutting deck is lifted at the pivot point, the stay maintains at least a predetermined distance between the cutting deck attachment mechanism of the cutting deck and the frame, thereby tilting the cutting deck as it is lifted. The arm comprises a distal end and a proximate end, the proximate end being pivotably attached to the frame while the distal end is pivotably connected to the pivot point on the cutting deck.

To address the above issues, embodiments of the present invention include a system that incorporates a mechanical device, e.g., a stay, which is pivotally connected to both the lawn mower's frame and the cutting deck in a lifting configuration, thereby maintaining at least a predetermined distance between the frame and the deck. In the lifting configuration, the cutting deck is released from a rear anchor point. Further, an arm of the cutting deck is pivotally connected to the frame at a pivot point. The arm is rotated in order to lift the cutting deck to a vertical service position while the stay maintains at least a predetermined distance between the frame and cutting deck. Further, the movement of arm is either restricted by the operator or a mechanical stop.

Embodiments that do not form part of the present invention may include a system and method where the cutting deck is lifted and tilted (e.g.., rotated) relative to the lawn mower frame so that an operator can gain access to the underside. To effectuate this tilting, a first portion of the cutting deck is first released from an arm of the lawn mower (or other portion of the lawn mower). The arm is pivotally attached to the frame of the lawn mower at one end and a second portion of the cutting deck at the other end. A stay is attached between a frame portion of the lawn mower and the first portion the cutting deck. The arm is configured to pivot at the frame of the lawn mower to lift the cutting deck at the point where the cutting deck is attached to the arm, thereby lifting the cutting deck. As the arm lifts the cutting deck through at least some of the arms range of motion, the stay exerts a force on the first portion of the cutting deck thereby causing the cutting deck to be tilted (i.e., thereby causing the cutting deck to rotate about the point where the arm is pivotally connected to the cutting deck).

In another example embodiment, a cutting deck attachment mechanism may include cutting blades, a body covering the cutting blades, an underside, a cutting deck, a pivot point and a stay. The underside may be directed downwardly toward the ground for mowing. The pivot point is configured to receive a lifting force from a lifting mechanism. The pivot point and the cutting deck attachment mechanism are spaced apart from each other. The stay includes a first end and a second end. The first end of the stay is configured to connect to the cutting deck attachment mechanism, and the second end is configured to connect to a frame attachment mechanism of the frame. Thus, while the body is lifted at the pivot point, the stay applies a force to the cutting deck attachment mechanism, thereby tilting the body.

In another embodiment that does not form part of the invention, a method of tilting a cutting deck for a lawn mower may comprise providing a lawn mower including a frame (including a frame attachment mechanism), a cutting deck, and an arm. The cutting deck includes a pivot point and a cutting deck attachment mechanism located at a second point. The pivot point and the second point are spaced from each other. The arm may include a proximate end and a distal end, where the distal end attaches to a pivot point of the cutting deck, and where the proximate end is coupled to a lifting mechanism. A first end of a stay is attached to the cutting deck attachment mechanism, and a second end of the stay is attached to the frame attachment mechanism. The distal end of the arm is lifted so that a lifting force is asserted on the cutting deck at the pivot point so that, while the cutting deck is lifted at the pivot point, the stay maintains at least a predetermined distance between the cutting deck attachment mechanism of the cutting deck and the frame, thereby tilting the cutting deck.

Some example embodiments may improve the ability to access the underside of the cutting deck.

### BRIEF DESCRIPTION OF THE DRAWINGS

Having thus described embodiments of the invention in general terms, reference will now be made to the accompanying drawings, which are not necessarily drawn to scale, and wherein:
FIG. 1A illustrates a side view of a riding lawn mower according to an example embodiment;
FIG. 1B illustrates a top view of the riding lawn mower according to an example embodiment;
FIG. 2A illustrates a side view of a cutting deck and partial frame of a riding lawn mower according to an example embodiment;
FIG. 2B illustrates a top view of a cutting deck and partial frame of a riding lawn mower according to an example embodiment;
FIG. 2C illustrates a front view of a cutting deck and partial frame of a riding lawn mower according to an example embodiment;
FIG. 3A illustrates a side view of a stay according to an example embodiment;
FIG. 3B illustrates a side view of a first adjustment member of the stay of FIG. 3A according to an example embodiment;

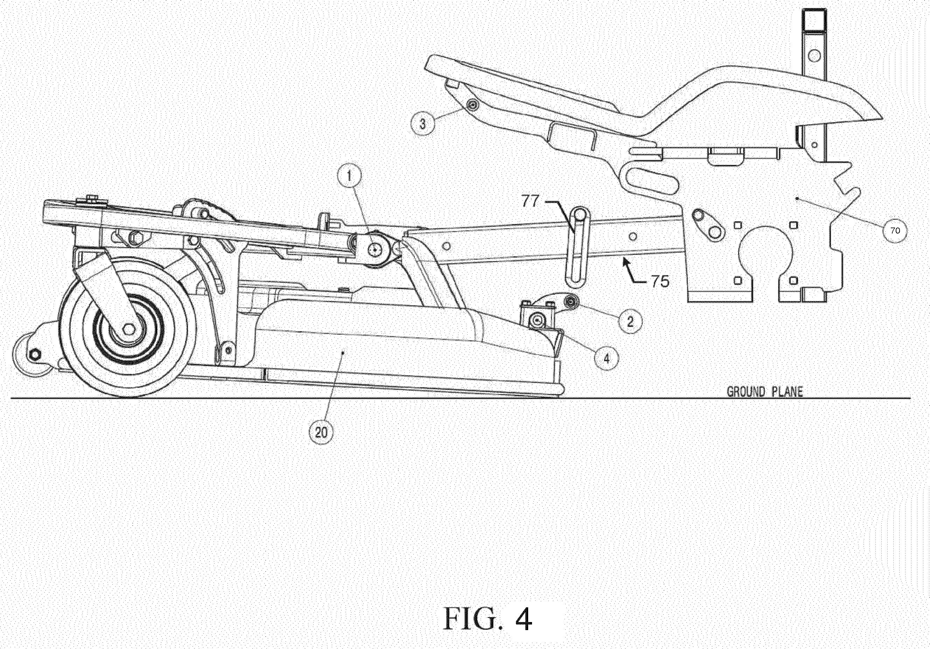

FIG. 4 illustrates a side view of the cutting deck of FIG. 2A with one end of the cutting deck released from the arm according to an example embodiment;
FIG. 5A illustrates a side view of the cutting deck of FIG. 2A with the stay in place according to an example embodiment;
FIG. 5B illustrates a partial perspective view of the cutting deck of FIG. 2A with the stay in place according to an example embodiment;
FIG. 5C illustrates a partial perspective view of the second end of the stay attached to the frame of FIG. 5B with the stay in place according to an example embodiment;
FIG. 5D illustrates a partial perspective view of the first end of the stay attached to the anchor point of the cutting deck of FIG. 5B according to an example embodiment;
FIG. 6 illustrates a side view of the cutting deck of FIG. 2A with the cutting deck tilted according to an example embodiment; and

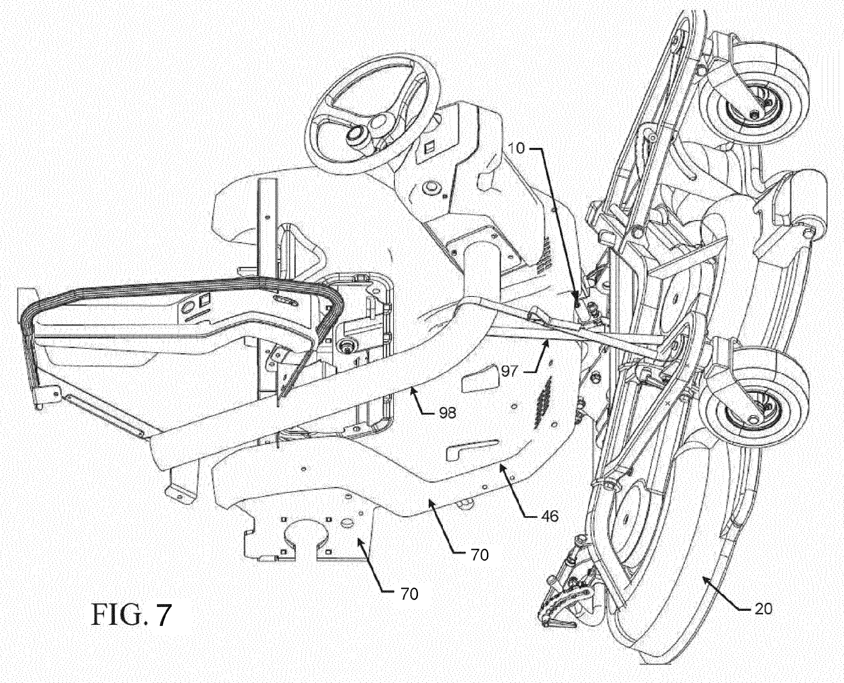

FIG. 7 illustrates a perspective top front view of the cutting deck of FIG. 2A with the cutting deck tilted according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

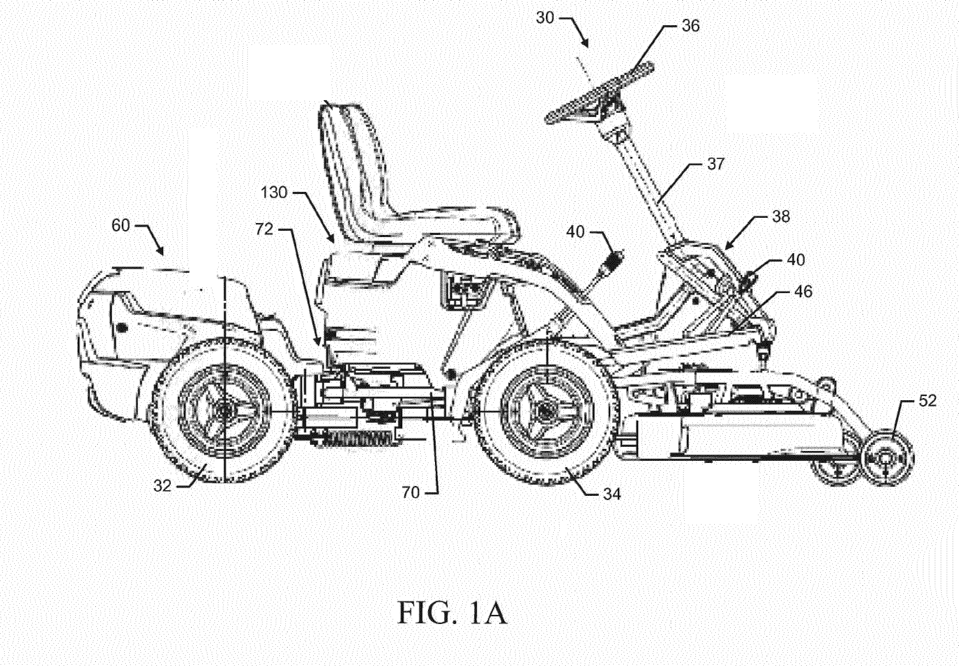

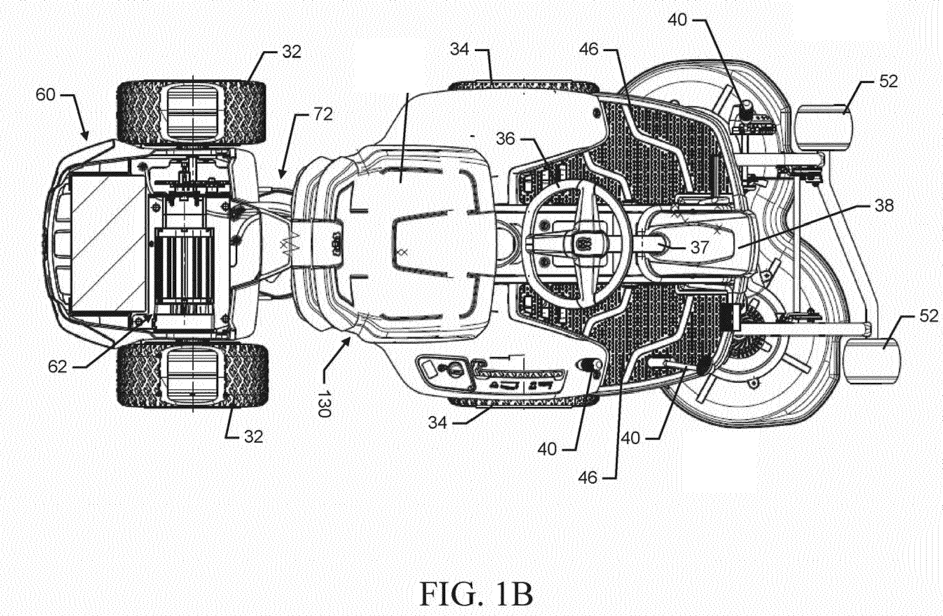

FIG. 1, which includes FIGS. 1A and 1B, illustrates a riding lawn mower 10 according to an example embodiment. Although an articulated riding lawn mower with a front-mounted cutting deck is shown herein, as will be appreciated by a person skilled in the art, embodiments of the invention may be similarly employed on other types of mowers where the cutting deck can be lifted and tilted relative to the frame, including some walk-behind mowers, zero-turn riding mowers, stand-on mowers, tractors, remote-control mowers, robotic mowers, etc. Therefore, FIGS. 1A and 1B, and the accompanying description, describe only one example lawn mower configuration and many other configurations of lawn mower are possible and may similarly employ embodiments of the invention described herein.

Referring to FIGS. 1A and 1B, a side view and top view of the example riding lawn mower are illustrated, respectively. In some embodiments, the riding lawn mower may include seat that may be disposed at a center, rear or front portion of the riding lawn mower. The riding lawn mower may also include a steering assembly 30 (e.g., a steering wheel, handle bars, or the like) functionally connected to the wheels of the riding lawn mower to which steering inputs are provided. In some cases, the steering inputs may be provided to rear wheels 32 of the riding lawn mower to allow the operator to steer the riding lawn mower. Since a steering control is provided to the rear wheels 32, the front wheels 34 may not receive steering inputs in some embodiments. The operator may sit on the seat, which may be disposed to the rear of the steering assembly 30 to provide input for steering of the riding lawn mower via the steering assembly 30.

In an example embodiment, the steering assembly 30 may include a steering wheel 36 and a steering column 37. The steering column 37 may operably connect to additional steering assembly components described in greater detail below. Moreover, in some embodiments, the steering column 37 may extend into a steering console 38, which may provide a cover to improve the aesthetic appearance of the riding lawn mower by obscuring the view of various mechanical components associated with the steering assembly 30. The riding lawn mower may also include additional control related components 40 such as one or more speed controllers, cutting height adjusters and/or cutting unit lifting controllers. Some of these controllers may be provided in the form of foot pedals that may sit proximate to a footrest 46 (which may include a portion on both sides of the riding lawn mower (e.g., on opposite sides of the steering console 38) to enable the operator to rest his or her feet thereon while seated in the seat.

In some example embodiments, the steering assembly 30 may be embodied as an assembly of metallic or other rigid components that may be welded, fitted, bolted or otherwise operably coupled to each other and coupled to the wheels (rear wheels 32 in this example) of the riding lawn mower to which steering inputs are provided. For example, the steering assembly 30 may include or otherwise be coupled with a steering cable assembly or a system of mechanical linkages to translate rotational motion applied to the steering assembly 30 (and more particularly to the steering wheel 36) into directional inputs to orient the wheels (e.g., rear wheels 32) accordingly. Other steering control systems may be employed in some alternative embodiments.

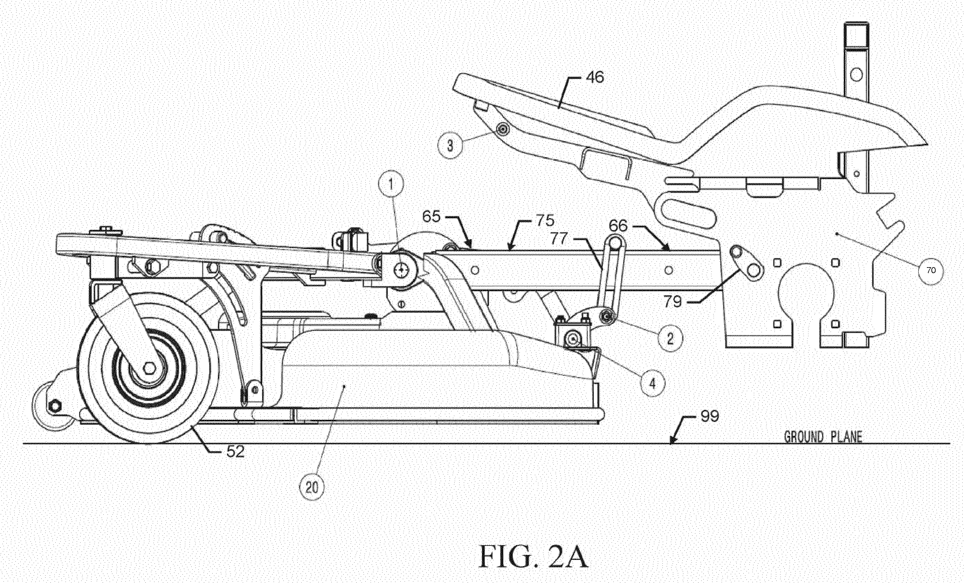

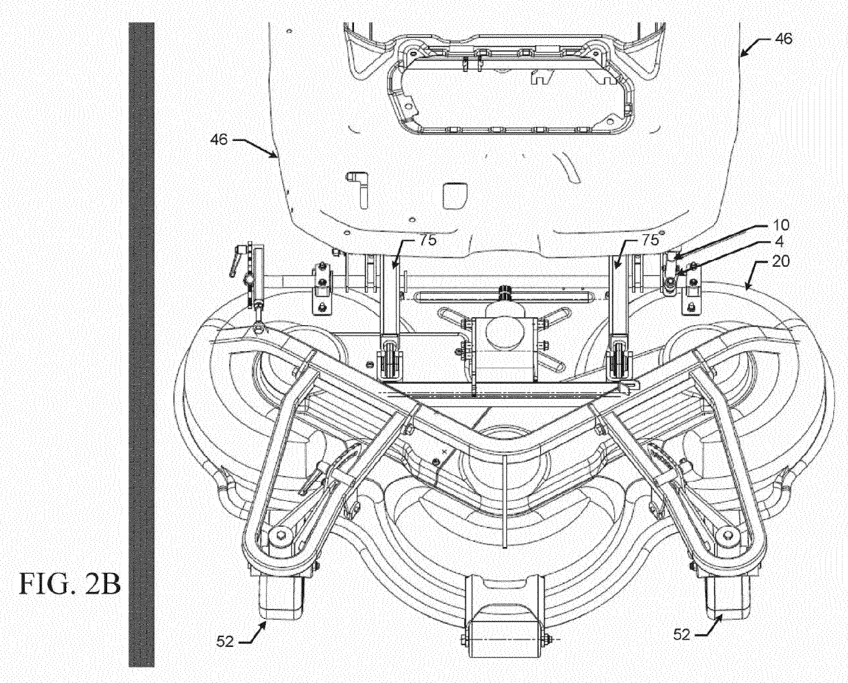

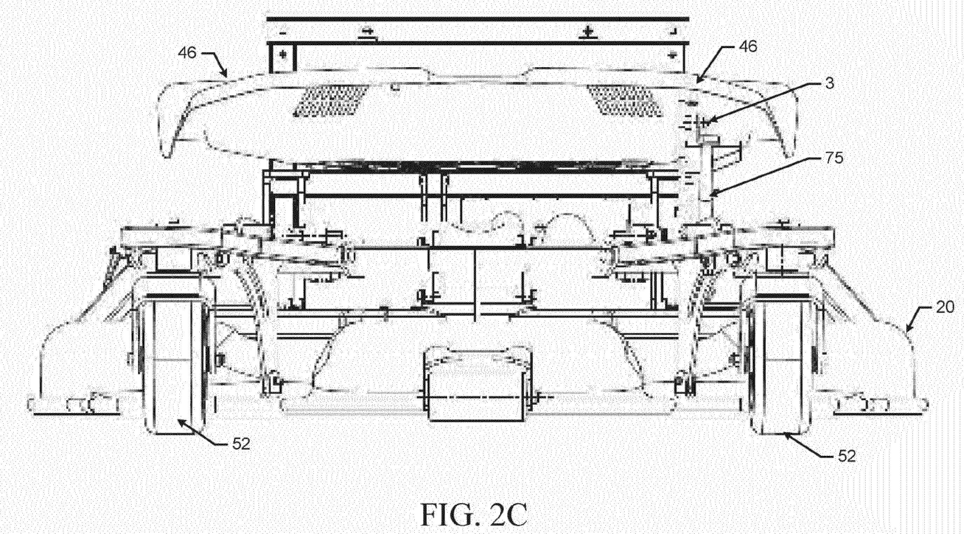

The riding lawn mower may also include, or be configured to support attachment of, a cutting deck 20 having at least one cutting blade mounted therein. FIG. 2, as discussed later, illustrates portions of the cutting deck 20 according to example embodiments. The cutting deck 20 may be a removable attachment that may be positioned in front of the front wheels 34 in a position to enable the operator to cut grass using the cutting blade when the cutting blade is rotated below the cutting deck 20 and the cutting deck 20 is in a cutting position. In other embodiments, the cutting deck may be positioned behind or to the side of the front wheels 34 so that the cutting deck is not disposed completely under the frame of the lawn mower (e.g., so that the cutting deck can be tilted to access the underside thereof). When operating to cut grass, the grass clippings may be captured by a collection system, mulched, or expelled from the cutting deck 20 via either a side discharge or a rear discharge.

In some embodiments, the cutting deck 20 may be elevated or lifted out of direct contact with the ground via a cutting unit lifting controller. In this regard, the cutting unit lifting controller may be a foot pedal or hand operated lever that operates linkages to lift or tilt the cutting deck 20 upward or may be some other operator input device coupled to an electrical controller, hydraulic lift system, and/or the like, as will be discussed below. Lifting the cutting deck 20 may enable the riding lawn mower to traverse certain rough terrain or obstacles (e.g., small rocks, curbs, or other features) or may otherwise be preferable for some operators when in a transit mode, or when the riding lawn mower is not actively being used in a cutting operation. In some embodiments, the cutting deck 20 itself may include wheels 52 to help ensure that the cutting deck 20 stays relatively level during operation to provide an even cut.

In embodiments in which the cutting deck 20 is removable, the cutting deck 20 may include blade drive components (e.g., belts, pulleys, chains, a blade motor or other components) that may be used to functionally operate the cutting deck 20 during a cutting operation. The cutting deck 20 may mate with a portion of the riding lawn mower via a cutting deck mounting assembly configured to mate with the riding lawn mower to join the cutting deck 20 to the riding lawn mower to enable the cutting deck 20. FIG. 1 illustrates the riding lawn mower with the cutting deck 20 attached.

In the pictured example embodiment of FIG. 1, drive motor compartment 60 of the riding lawn mower may be disposed to the rear of a seated operator to house various components of the riding lawn mower including, for example, an electric drive motor 62, an internal combustion engine, or other drive system. However, in other example embodiments, the drive motor compartment 60 could be in different positions such as in front of the operator or below the operator. In some embodiments, the electric drive motor 62 may be operably coupled to one or more of the wheels of the riding lawn mower (the rear wheels 32 in this example) in order to provide drive power for the riding lawn mower. Although the electric drive motor 62 may be capable of powering the rear wheels 32, in other alternative embodiments, the electric drive motor 62 may power all four wheels of the riding lawn mower (e.g., in cases where the riding lawn mower is not articulated). Moreover, in some cases, the electric drive motor 62 may manually or automatically shift between powering either two wheels or all four wheels of the riding lawn mower.

In an example embodiment, the electric drive motor 62, the steering assembly 30, the cutting deck 20, the seat and other components of the riding lawn mower may be operably connected (directly or indirectly) to a frame 70 of the riding lawn mower. The frame 70 may be a rigid structure configured to provide support, connectivity and interoperability functions for various ones of the components of the riding lawn mower. In some embodiments, the frame 70 may be split or articulated such that, for example, the front wheels 34 are disposed on an opposite portion of the frame 70 than the portion of the frame on which the back wheels 32 are disposed with respect to an articulated joint 72 in the frame 70.

The riding lawn mower may also include a battery power source. The battery power source may include one or more batteries that may provide power for all electrical components of the riding lawn mower. In cases in which multiple batteries are combined to form the battery power source, the batteries may be distributed or located near one another.

Referring now to FIGS. 2A-C the cutting deck 20 may include a blade housing or body that may house one or more cutting blades. The cutting blades may turn responsive to rotary motive forces applied by corresponding one or more blade drive motors. The blade motors may be controlled via one or more blade motor controllers.

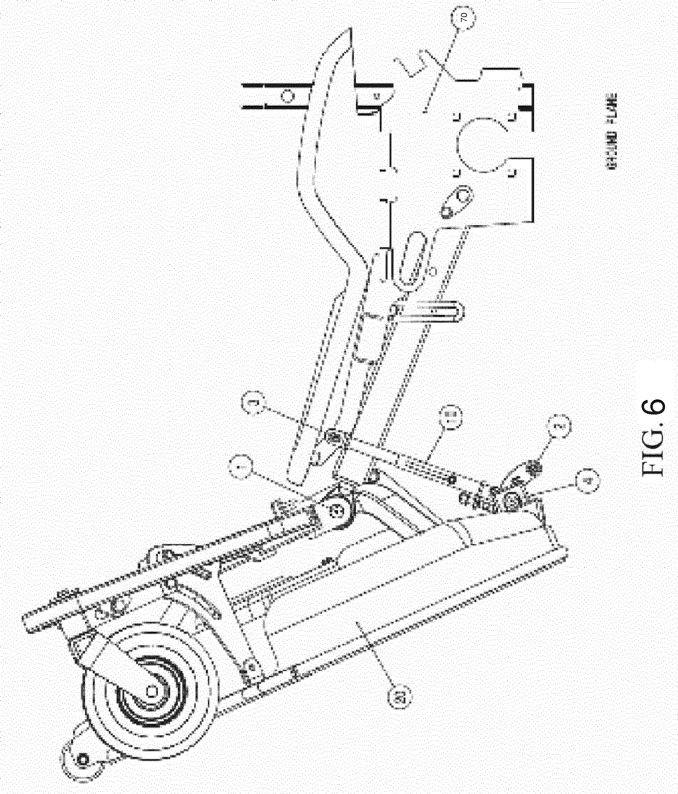

A cutting deck mounting assembly may be provided for attachment of the cutting deck 20 to the frame of the riding lawn mower. The cutting deck mounting assembly may suspend the blade housing (and therefore also the cutting blades) relative to the ground 99. The cutting deck mounting assembly includes at least one arm 75. In one embodiment, the cutting deck mounting assembly includes a pair of arms 75 as illustrated in FIGS. 2B and 6B. Referring to FIG. 2A, each arm 75 includes a proximate end 66 that is pivotably attached to a point 79 on a frame 70 of the lawn mower and a distal end 65 that is pivotably attached to a pivot point 1 on the cutting deck 20. In the exemplary embodiment of FIG. 2A, each arm 75 is pivotably connected to the frame 70 proximate the footrest 46 of the lawn mower, but it should be understood that each arm could be pivotably connected to another point on the frame of the riding lawn mower.

Each arm is configured to be attached to a lifting mechanism that operates to lift the distal end 65 of the arm 75. According to one embodiment, the lifting mechanism is a hydraulic device that pivots the arm 75 at point 79. In another embodiment (which is not illustrated in the FIGS.), the lifting mechanism is a mechanical member (e.g., a pedal) which, when depressed exerts a force on a lever portion of each arm 75 that is separated by the distal end by the pivot point 79 so that the lever portion of each arm 75 acts as a lever. In this regard, in some embodiments, the mechanical member (not shown) imparts a downward force on the arm's lever portion so that an upward force is translated to the distal end 65 of the arm 75 via the pivot point 79. It should be understood that various other mechanisms are possible for lifting the distal end of each arm 75 and the present invention should not be limited by the illustrative or exemplary-described embodiments.

The arms 75 are configured to lift the cutting deck 20 at pivot point 1. The arms 75 each may be a rigid member or series of members which translates a force from the lifting mechanism to the cutting deck 20 to lift the cutting deck 20. However, it should be understood that each arm 75 could take various forms and need not be a rigid member that vertically lifts the cutting deck at the pivot point 1. Instead, each arm 75 may be another device which asserts a force having vertical and/or horizontal force components on the pivot point 1 of the cutting deck 20. For example, instead of a rigid member, the arm 75 may be a cable/rope assembly that asserts a vertical (and/or horizontal) force on the pivot point 1 the cutting deck 20. Additionally, the arm 75 could assert a horizontal force on the pivot point 1 of the cutting deck 20 which would also cause the cutting deck to tilt (as discussed later). There are numerous other ways to assert vertical and/or horizontal forces on the pivot point 1 on the cutting deck 20, and the present invention are not necessarily limited by the embodiments explicitly illustrated or disclosed herein.

It should be understood that frame 70 (including the point 79 on the frame where the proximate end 66 of the arm 75 is pivotably attached thereto) is generally vertically stationary relative to ground 99 during the cutting deck lifting processes. Additionally, it should be understood that the cutting deck 20 is described herein as at least conceptually separate from the frame 70 and may be physically separate in that the cutting deck 20 may be a removable feature according to some embodiments.

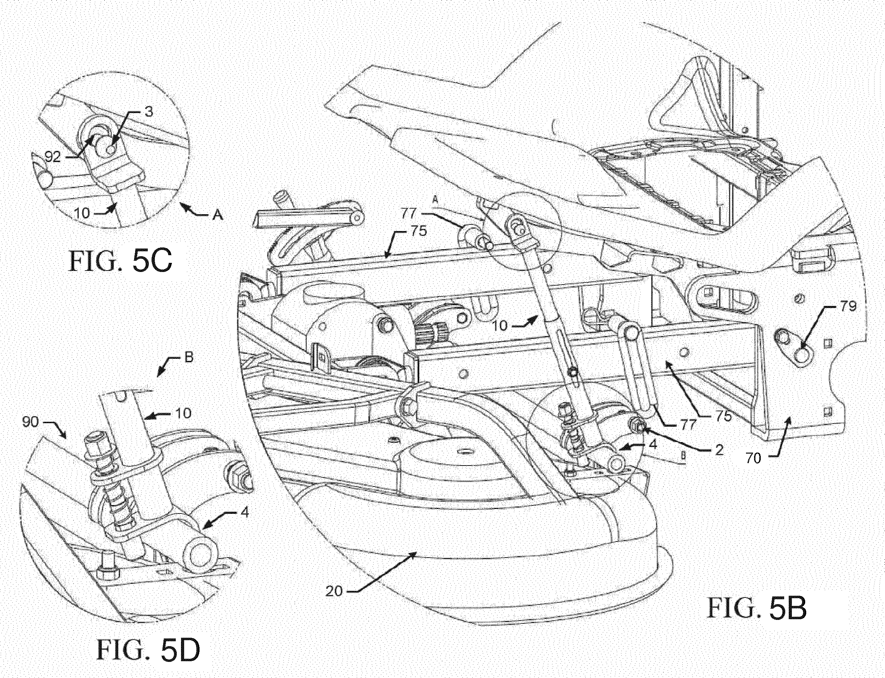

In the illustrated embodiment, one or more connectors 77 removably connects the cutting deck 20 to each arm 75 during operation so that the arms 75 support the cutting deck 20 and so that one end of the cutting deck (proximate to the anchor point 2) does not touch the ground 99 during operation of the lawn mower and instead hangs from the arms. Each connector 77 may be an industrial rubber band, a rigid member or other member which is configured to attach one end of the cutting deck to a portion of the arm 75. Each connector 77 may have one loop to removably connect to each arm 75 and another loop to removably connect to an anchor point 2 of the cutting deck 20. The anchor point 2 may be a protrusion fixedly attached to the cutting deck 20. In some embodiments, a first connector 77 is attached to one side of the arm 75 and a second connector is connected to the other side of the arm 75 (not shown) or to another arm 75 (FIG. 5B).

The cutting deck 20 includes a cutting deck attachment portion 4 which allows a first end 80 of the stay 10 to be connected thereto. The cutting deck attachment portion 4 can be any device or configuration so that the stay's first end can be connected thereto. For example, as illustrated by FIGS. 2A, 5B and 5D, the cutting deck attachment portion 4 may include a rod attached to the cutting deck 20.

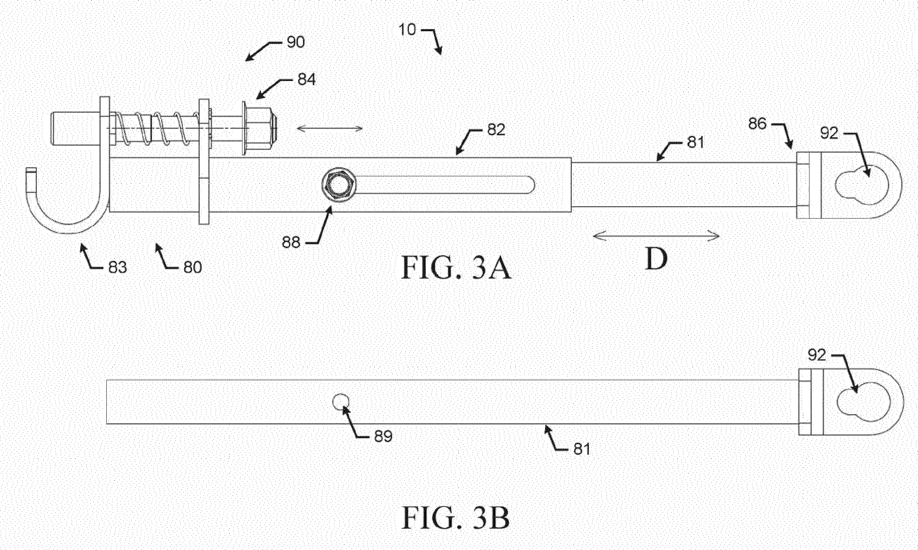

An example of the stay 10 is illustrated in FIG. 3A. The stay 10 may include a first adjustable member 81 and a second adjustable member 82. The second adjustable member 82 includes a slot and also defines an inner portion configured to receive the first adjustable member 81. The first adjustable member 81 defines a hole 89 configured to receive a pin or screw 88. The first adjustable member 81 is received in the second adjustable member 82, and the pin or screw 88 fits into the slot and adjustably secures the portion of the first adjustable member 81 disposed in the interior portion of the second adjustable member 82. In this regard, the first adjustable member 81 can be adjusted so that the longitudinal length of the stay 10 can be adjusted by loosening the pin or screw 88, adjusting the first adjustable member 81 along direction D relative to the second adjustable member 82, and then tightening the pin or screw 88. In other embodiments, the longitudinal length of the stay 10 is permitted to freely change within the limits of the slot in member 82 as forces on it demand. In this regard, the stay 10 may have a particular minimum and maximum length that is predetermined. In still other embodiments, the stay 10 may be of one fixed length (e.g., a single bar instead of the two telescoping members shown herein).

The stay 10 includes an attachment member 90 attached to a first end 80 of the stay 10. The attachment member 90 may be any device which can attach to the cutting deck attachment portion 4 of the cutting deck 20. For example, as illustrated in FIG. 3A, the attachment member 90 may include a loop member 83 which is configured to connect to a rod that is attached to the cutting deck. The loop member 83 is attached to a screw 84 which, when screwed into a receptacle locks the loop member 83 to the rod, thereby securing the stay 10 to the cutting deck attachment portion 4 of the cutting deck 20. Other attachment members may also be used including a hook, a latching mechanism, a pin, a screw, or any other means to removably attach a rod to a device.

In one embodiment, the first end 80 of the stay 10 is fixed, but pivotally attached to cutting deck attachment portion 4 so that the stay 10 can be stored on the cutting deck and then rotated into place and attached to the frame when it's desired to service the cutting deck. In other embodiments, the second end 86 of the stay 10 is fixed, but pivotally attached to frame attachment mechanism 3 so that the stay 10 can be stored on the frame and then rotated into place and attached to the cutting deck when it's desired to service the cutting deck.

The end 86 of the first adjustable member 81 of the stay 10 also defines an aperture 92 which is configured to attach to a frame attachment mechanism 3. The frame attachment mechanism 3 may be a pin with a head and this embodiment is discussed more below. The aperture 92 has a larger diameter portion and a smaller diameter portion. The head of the frame attachment mechanism 3 has a diameter that is less than the larger diameter portion but larger than the smaller diameter portion. The shaft of the frame attachment mechanism 3 has a diameter that is smaller than both the larger diameter portion and the smaller diameter portion. The connection of the second adjustable member 82 is discussed later with regard to FIG. 5B.

Thus, the stay 10 connects the first end 80 of the stay to the cutting deck 20 (e.g., at cutting deck attachment portion 4) and another end 86 to the frame 70 (e.g., at frame attachment mechanism 3). The locations and configuration of the attachment points for the stay 10 are discussed below.

According to some embodiments, the location where the stay 10 connects to the cutting deck 20 determines the amount of rotation of the cutting deck 20. For example, in some embodiments, the closer the cutting deck attachment portion 4 (and thus the location of where the first end 80 of the stay 10 is connected to the cutting deck 20) is connected to the pivot point 1 of the cutting deck 20, the higher the degree of rotation that the cutting deck 20 will rotate.

With regard to the location of the frame attachment mechanism 3 (or wherever the second end 86 of the stay 10 attaches to the frame 70), the location of the frame attachment mechanism 3 is dependent of the location of the deck attachment portion 4 (or wherever the first end 80 of the stay 10 attaches to the cutting deck). In one embodiment, the location of the frame attachment mechanism 3 is positioned relative to the cutting deck attachment portion 4 such that the alignment of the affixed stay 10 (i.e., the stay 10 after being attached to the cutting deck 20 and the frame 70) substantially corresponds (e.g., is substantially parallel) with the direction in which the force that is applied by the arm 75 to the pivot point 1 of the cutting deck 20. This allows the stay 10 to apply a force to the cutting deck attachment portion 4 in the opposite direction than the direction of the lifting force that is applied to the pivot point 1 at the cutting deck 20. For example, if the cutting deck 20 is going to be lifted directly vertical at the pivot point 1 by the arm 75, the stay 10 may be connected so that the stay 10 is directly vertical or substantially vertical so that the stay will apply a downward force to the cutting deck attachment portion 4, thereby rotating the cutting deck. Alternatively, if the force of direction applied to the pivot point 1 by the arm 75 is horizontal, the stay 10 should be orientated in a horizontal direction after being affixed to the frame and cutting deck 20 according to embodiments.

In some embodiments, the location of the cutting deck attachment portion 4 is between the pivot point 1 and the frame 70, and/or between the pivot point 1 and the rear of the cutting deck, and/or between the pivot point 1 and the arm pivot point 79. In some embodiments, the location of the frame attachment mechanism 3 is forward and above the arm pivot point 79, but remains rearward of the pivot point 1 throughout the lifting process. In some embodiments, the location of the frame attachment mechanism 3 is between the pivot point 1 and the cutting deck attachment portion 4 (e.g., forward of the cutting deck attachment portion 4 or the rear of the cutting deck) when the cutting deck 20 is in a lowered position, but is between the cutting deck attachment portion 4 and the arm pivot point 79 (e.g., rearward of the cutting deck attachment portion 4 and/or the rear of the cutting deck) when the cutting deck 20 is in a lifted position. In the illustrated embodiment, the center of gravity of the cutting deck 20 is forward of the pivot point 1 and remains forward of the pivot point 1 throughout the lifting process. However, in other embodiments, the pivot point 1 may be located at the center of gravity of the cutting deck 20. In still other embodiments, the center of gravity may be rearward of the pivot point 1.

The second end 86 of the stay 10 is connected to the frame attachment mechanism 3. This is accomplished by sliding the head of the frame attachment mechanism 3 through the larger diameter portion of aperture 92 and thereafter, sliding the shaft of the frame attachment mechanism 3 in the smaller diameter portion of the aperture 92. This position is illustrated at FIG. 5B and more particularly at FIG. 5C which is a more detailed view of a portion (A) of FIG. 5B.

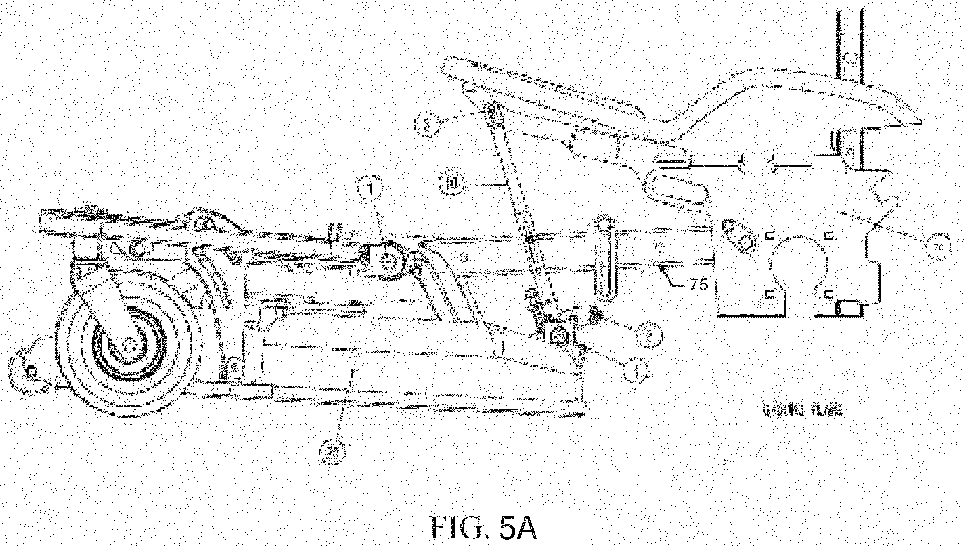

As previously discussed, the stay 10 may be telescopic, as shown, in that the longitudinal length of the stay 10 may adjust within a predetermined range bound by the length of the slot in the second adjustable member 82 (e.g., the pin/screw 88 connecting to the first adjustable member 81 allows the first adjustable member 81 to slide in or out of the second adjustable member 82 only for the length of the slot within which the pin/screw 88 sits). The screw 88 may not be tightened so that the first adjustable member 81 can be adjusted while the cutting deck 20 is being lifted or lowered. As illustrated in FIG. 5A and 5B, the stay 10 is adjusted so that the stay's length is greater than the fully compacted length (e.g., the minimum length of the stay). Because the stay 10 is telescopic, this allows for ease of attaching the stay 10 onto the cutting deck 20 and frame 70 if the cutting deck is on a hill or on uneven terrain since the position of the stay 10 (rather than the cutting deck 20) is adjusted for attachment.

The above described embodiment is one aspect of the operation of the system. It is noted that the stay 10 maintains at least a predetermined distance between the frame 70 and one end of the cutting deck 20 whether the stay is extended or fully compacted. According to some embodiments, the predetermined distance refers to the stay's fully-compacted length. In some such embodiments, the stay may be extended to a length greater than the predetermined distance (e.g., during installation of the stay 10 into the lifting configuration), but, after the arm 75 has lifted the cutting deck 20 a certain distance (e.g., to where the wheels at the front of the cutting deck 20 are lifted off the ground), the length of the stay is automatically compacted (e.g., due to the force of gravity urging rotation of the cutting deck around pivot point 1 and/or due to lifting of the cutting deck 10) to the predetermined length. The term fully compacted refers to the longitudinal length of a telescoping stay 10 when forces are applied to both stay ends toward the stay center so that the first adjustable member 81 is received as far into the second adjustable member 82 as permitted by the configuration of the stay 10. Additionally, in the illustrated embodiment, the stay 10 may be configured to have enough compressive strength to resist a force equal to the weight of the cutting deck 20. It will be appreciated that, in some embodiments, the stay 10 does not need to be telescoping and may, instead, be a bar having a fixed length. In such an embodiment, the predetermined distance is the length of the bar between the to attachment mechanisms at or near each end.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims.

## Claims

1. A lawn mower comprising:
a frame (70);
a cutting deck (20) comprising an underside that can be directed downwardly toward the ground (99) for mowing, the cutting deck (20) further comprising a pivot point (1) and a cutting deck attachment mechanism (4) separated from each other;
an arm (75) connected to a lifting mechanism and connecting the cutting deck (20) with the frame (70) so that the arm (75) is configured to lift the cutting deck (20) from a lower position to an upper position; and
a stay (10) comprising a first end (80) and a second end (86), the first end (80) of the stay (10) being configured to connect to the cutting deck attachment mechanism (4), and the second end (86) being configured to connect to a frame attachment mechanism (3) of the frame (70) so that, while the cutting deck (20) is lifted at the pivot point (1), the stay (10) maintains at least a predetermined distance between the cutting deck attachment mechanism (4) of the cutting deck (20) and the frame (70), thereby tilting the cutting deck (20),
**characterized in that** the arm (75) comprises a distal end (65) and a proximate end (66), the proximate end (66) being pivotably attached to the frame (70) while the distal end (65) is pivotably connected to the pivot point (1) on the cutting deck (20).

2. The lawn mower of claim 1, wherein the proximate end (66) of the arm (75) is operatively connected to the lifting mechanism.

3. The lawn mower of claim 2, wherein the lifting mechanism comprises one of:
a hydraulic lift operatively configured to lift the distal end (65) of the arm (75); or
a pedal system comprising a pedal and a member to connect the pedal to the proximate
end of the arm (75) so that when the pedal is depressed, the distal end (65) of the arm (75) is lifted.

4. The lawn mower of any of claims 1 to 3, further comprising a connector (77) comprising a first end (80) and a second end (86), wherein the first end (80) is connected to a portion of a the arm (75) and the second end (86) can be removably attached to an anchor point (2) of the cutting deck (20).

5. The lawn mower of claim 4, wherein the anchor point (2) comprises a protrusion extending from the cutting deck (20).

6. The lawn mower of any of claims 1 to 5, wherein the stay (10) is configured to be adjustable so that the length between the first end (80) and the second end (86) can be increased or decreased.

7. The lawn mower of claim 6, wherein the stay (10) comprises a first adjustable member (81) and a second adjustable member (82), the second adjustable member (82) defining an interior portion configured to adjustably receive at least a portion of the first adjustable member (81).

8. The lawn mower of claim 7, wherein the stay (10) further comprises a screw that comprises a shaft and a head, wherein the second adjustable member (82) includes a slot, and wherein the screw shaft is connected to the portion the first adjustable member (81) disposed within the interior of the second adjustable member (82) and the screw shaft is disposed in the slot.

9. The lawn mower of any of claims 1 to 8, further comprising a second arm connected to the lifting mechanism and configured to lift the cutting deck (20).

10. The lawn mower of any of claims 1 to 9, wherein cutting deck (20) is mounted to either the front of the lawn mower, the back of the lawn mower or the side of the lawn mower.

11. The lawn mower of any of claims 1 to 10, wherein the frame attachment mechanism (3) is attached to a foot pedal.

12. The lawn mower of any of claims 1 to 11, wherein the lawn mower comprises a riding lawn mower.

13. The lawn mower of any of claims 1 to 12, wherein the at least a predetermined distance comprises a fixed distance.

14. The lawn mower of claim 13, wherein the stay (10) is configured such that when the cutting deck (20) is initially lifted, the stay (10) is extended so that the length of the extended stay (10) is a first distance, wherein when the cutting deck (20) has been lifted a certain distance, the stay (10) is fully compacted so that the length of the fully compacted stay (10) is the fixed distance, and wherein the first distance is greater than the fixed distance.

## Patentansprüche

1. Rasenmäher, aufweisend:
einen Rahmen (70);
ein Mähwerk (20), aufweisend eine Unterseite, welche nach unten in Richtung auf den Boden (99) zum Mähen ausgerichtet werden kann, wobei das Mähwerk (20) ferner einen Drehpunkt (1) und einen Mähwerk-Befestigungsmechanismus (4) aufweist, welche voneinander getrennt sind;
einen Arm (75), welcher mit einem Hebemechanismus verbunden ist und das Mähwerk (20) mit dem Rahmen (70) verbindet, so dass der Arm (75) dafür ausgelegt ist, das Mähwerk (20) aus einer unteren Stellung in eine obere Stellung anzuheben; und
eine Stütze (10), welche ein erstes Ende (80) und ein zweites Ende (86) aufweist, wobei das erste Ende (80) der Stütze (10) dafür ausgelegt ist, um sich mit dem Mähwerk-Befestigungsmechanismus (4) zu verbinden, und das zweite Ende (86) dafür ausgelegt ist, um sich mit einem Rahmen-Befestigungsmechanismus (3) des Rahmens (70) zu verbinden, so dass, während das Mähwerk (20) an dem Drehpunkt (1) angehoben wird, die Stütze (10) zumindest einen vorgegebenen Abstand zwischen dem Mähwerk-Befestigungsmechanismus (4) des Mähwerks (20) und dem Rahmen (70) beibehält, wodurch das Mähwerk (20) geschwenkt wird,
**dadurch gekennzeichnet, dass** der Arm (75) ein abgelegenes Ende (65) und ein nahe gelegenes Ende (66) aufweist, wobei das nahegelegene Ende (66) drehbar an dem Rahmen (70) befestigt ist, während das abgelegene Ende (65) drehbar mit dem Drehpunkt (1) an dem Mähwerk (20) verbunden ist.

2. Rasenmäher nach Anspruch 1, wobei das nahegelegene Ende (66) des Arms (75) wirksam mit dem Hebemechanismus verbunden ist.

3. Rasenmäher nach Anspruch 2, wobei der Hebemechanismus aufweist:
einen hydraulischen Hubzug, welcher betrieblich dafür ausgelegt ist, das abgelegene Ende (65) des Arms (75) anzuheben; oder
ein Pedalsystem, aufweisend ein Pedal und ein Element, um das Pedal mit dem nahe gelegenen Ende des Arms (75) zu verbinden, so dass, wenn das Pedal niedergedrückt wird, das abgelegene Ende (65) des Arms (75) angehoben wird.

4. Rasenmäher nach einem der Ansprüche 1 bis 3, ferner aufweisend ein Verbindungsglied (77), welches ein erstes Ende (80) und ein zweites Ende (86) aufweist, wobei das erste Ende (80) mit einem Abschnitt des Arms (75) verbunden ist und der zweite Arm (86) an einem Ankerpunkt (2) des Mähwerks (20) abnehmbar befestigt sein kann.

5. Rasenmäher nach Anspruch 4, wobei der Ankerpunkt (2) eine sich aus dem Mähwerk (20) erstreckende Ausstülpung aufweist.

6. Rasenmäher nach einem der Ansprüche 1 bis 5, wobei die Stütze (10) dafür ausgelegt ist, um einstellbar zu sein, so dass die Länge zwischen dem ersten Ende (80) und dem zweiten Ende (86) vergrößert oder verkleinert werden kann.

7. Rasenmäher nach Anspruch 6, wobei die Stütze (10) ein erstes einstellbares Element (81) und ein zweites einstellbares Element (82) aufweist, wobei das zweite einstellbare Element (82) einen inneren Abschnitt definiert, welcher dafür ausgelegt ist, um zumindest einen Abschnitt des ersten einstellbaren Elements (81) einstellbar aufzunehmen.

8. Rasenmäher nach Anspruch 7, wobei die Stütze (10) ferner eine Schraube aufweist, welche einen Schaft und einen Kopf aufweist, wobei das zweite einstellbare Element (82) einen Schlitz umfasst und wobei der Schraubenschaft mit dem Abschnitt des ersten einstellbaren Elements (81) verbunden ist, welcher im Inneren des zweiten einstellbaren Elements (82) angeordnet ist, und der Schraubenschaft in dem Schlitz angeordnet ist.

9. Rasenmäher nach einem der Ansprüche 1 bis 8, ferner aufweisend einen zweiten Arm, welcher mit dem Hebemechanismus verbunden und dafür ausgelegt ist, um das Mähwerk (20) anzuheben.

10. Rasenmäher nach einem der Ansprüche 1 bis 9, wobei das Mähwerk (20) entweder an der Vorderseite des Rasenmähers, der Rückseite des Rasenmähers oder der Seite des Rasenmähers montiert ist.

11. Rasenmäher nach einem der Ansprüche 1 bis 10, wobei der Rahmen-Befestigungsmechanismus (3) an einem Fußpedal befestigt ist.

12. Rasenmäher nach einem der Ansprüche 1 bis 11, wobei der Rasenmäher einen Aufsitzrasenmäher aufweist.

13. Rasenmäher nach einem der Ansprüche 1 bis 12, wobei der zumindest ein vorgegebener Abstand einen festen Abstand aufweist.

14. Rasenmäher nach Anspruch 13, wobei die Stütze (10) derartig ausgelegt ist, dass, wenn das Mähwerk (20) anfänglich angehoben wird, die Stütze (10) ausgefahren wird, so dass die Länge der ausgefahrenen Stütze (10) ein erster Abstand ist, wobei, wenn das Mähwerk (20) eine bestimmte Strecke angehoben worden ist, die Stütze (10) vollständig zusammengedrückt ist, so dass die Länge der vollständig zusammengedrückten Stütze (10) der feste Abstand ist, und wobei der erste Abstand größer als der feste Abstand ist.

## Revendications

1. Tondeuse à gazon comprenant:
un châssis (70);
un plateau de coupe (20) comprenant une face inférieure qui peut être dirigée vers le bas en direction du sol (99) à des fins de tonte, le plateau de coupe (20) comprenant en outre un point de pivotement (1) et un mécanisme de fixation de plateau de coupe (4) séparés l'un de l'autre;
un bras (75) raccordé avec un mécanisme de levage et raccordant le plateau de coupe (20) avec le châssis (70) de telle sorte que le bras (75) soit configuré pour élever le plateau de coupe (20) d'une position inférieure à une position supérieure; et
une entretoise (10) comprenant une première extrémité (80) et une seconde extrémité (86), la première extrémité (80) de l'entretoise (10) étant configurée pour se raccorder avec le mécanisme de fixation de plateau de coupe (4), et la seconde extrémité (86) étant configurée pour se raccorder avec un mécanisme de fixation de châssis (3) du châssis (70) de telle sorte que, pendant que le plateau de coupe (20) est élevé au niveau du point de pivotement (1), l'entretoise (10) maintienne au moins une distance prédéterminée entre le mécanisme de fixation de plateau de coupe (4) du plateau de coupe (20) et le châssis (70), de façon à incliner ainsi le plateau de coupe (20),
**caractérisée en ce que** le bras (75) comprend une extrémité distale (65) et une extrémité proximale (66), l'extrémité proximale (66) étant fixée à pivotement au châssis (70), tandis que l'extrémité distale (65) est raccordée à pivotement avec le point de pivotement (1) sur le plateau de coupe (20).

2. Tondeuse à gazon selon la revendication 1, dans laquelle l'extrémité proximale (66) du bras (75) est fonctionnellement raccordée avec le mécanisme de levage.

3. Tondeuse à gazon selon la revendication 2, dans laquelle le mécanisme de levage comprend l'un des éléments suivants:
un système de levage hydraulique fonctionnellement configuré pour élever l'extrémité distale (65) du bras (75); et
un système de pédale comprenant une pédale et un organe pour raccorder la pédale avec l'extrémité proximale du bras (75) de telle sorte que, lorsque la pédale est enfoncée, l'extrémité distale (65) du bras (75) soit élevée.

4. Tondeuse à gazon selon l'une quelconque des revendications 1 à 3, comprenant en outre un dispositif de raccordement (77) comprenant une première extrémité (80) et une seconde extrémité (86), dans lequel la première extrémité (80) est raccordée avec une partie du bras (75) et la seconde extrémité (86) peut être fixée de manière amovible à un point d'ancrage (2) du plateau de coupe (20).

5. Tondeuse à gazon selon la revendication 4, dans laquelle le point d'ancrage (2) comprend une protubérance s'étendant à partir du plateau de coupe (20).

6. Tondeuse à gazon selon l'une quelconque des revendications 1 à 5, dans laquelle l'entretoise (10) est configurée de façon à être réglable de telle sorte que la longueur entre la première extrémité (80) et la seconde extrémité (86) puisse être augmentée ou diminuée.

7. Tondeuse à gazon selon la revendication 6, dans laquelle l'entretoise (10) comprend un premier organe réglable (81) et un second organe réglable (82), le second organe réglable (82) définissant une partie intérieure configurée pour recevoir de manière réglable au moins une partie du premier organe réglable (81).

8. Tondeuse à gazon selon la revendication 7, dans laquelle l'entretoise (10) comprend en outre une vis qui comprend une tige et une tête, dans laquelle le second organe réglable (82) comprend une fente, et dans laquelle la tige de la vis est raccordée avec la partie du premier organe réglable (81) disposée à l'intérieur du second organe réglable (82) et la tige de la vis est disposée dans la fente.

9. Tondeuse à gazon selon l'une quelconque des revendications 1 à 8, comprenant en outre un second bras raccordé avec le mécanisme de levage et configuré pour élever le plateau de coupe (20).

10. Tondeuse à gazon selon l'une quelconque des revendications 1 à 9, dans laquelle le plateau de coupe (20) est installé à l'avant de la tondeuse à gazon, à l'arrière de la tondeuse à gazon ou sur le côté de la tondeuse à gazon.

11. Tondeuse à gazon selon l'une quelconque des revendications 1 à 10, dans laquelle le mécanisme de fixation de châssis (3) est fixé à une pédale.

12. Tondeuse à gazon selon l'une quelconque des revendications 1 à 11, la tondeuse à gazon comprenant une tondeuse à gazon autoportée.

13. Tondeuse à gazon selon l'une quelconque des revendications 1 à 12, dans laquelle l'au moins une distance prédéterminée comprend une distance fixe.

14. Tondeuse à gazon selon la revendication 13, dans laquelle l'entretoise (10) est configurée de telle sorte que, lorsque le plateau de coupe (20) est initialement élevé, l'entretoise (10) soit étendue de telle sorte que la longueur de l'entretoise (10) étendue soit égale à une première distance, dans laquelle, une fois que le plateau de coupe (20) a été élevé d'une certaine distance, l'entretoise (10) est complètement contractée de telle sorte que la longueur de l'entretoise (10) complètement contractée soit égale à la distance fixe, et dans laquelle la première distance est supérieure à la distance fixe.
